# EUROPÄISCHE PATENTSCHRIFT

(11) **EP 0 635 314 B1**
(45) Veröffentlichungstag und Bekanntmachung des Hinweises auf die Patenterteilung: **06.08.1997**
(21) Anmeldenummer: 94104256.6
(22) Anmeldetag: 18.03.1994
(51) Int. Cl.: B07C 3/20

(54) **Verfahren und Vorrichtung zum Sortieren von mit Adressinformationen versehenen Sendungen**
Method and device for sorting despatches provided with address information
Procédé et dispositif de tri d'envois pourvus d'informations d'adresse

(30) Priorität: 20.07.1993 DE 4324255
(43) Veröffentlichungstag der Anmeldung: 25.01.1995
(73) Patentinhaber: SIEMENS AKTIENGESELLSCHAFT, 80333 München (DE)
(72) Erfinder: Reich, Karl, Dipl.-Inf., D-78315 Radolfzell (DE)

(56) Entgegenhaltungen:
- EP-A- 0 148 783
- WO-A-90/12660
- FR-A- 2 268 311
- US-A- 4 992 649

## Beschreibung

Die Erfindung betrifft ein Verfahren und eine Vorrichtung zum Sortieren von mit Adreßinformationen versehenen Sendungen gemäß dem Oberbegriff von Patentanspruch 1 bzw. 8 (siehe (US-A-4992649).

Durch die Verfügbarkeit preiswerter und leistungsfähiger Rechnertechnologie im Bereich des automatischen Lesens von Anschriften ist während der letzten zehn Jahre in der Entwicklung der Briefsortieranlagen ein enormer Fortschritt feststellbar. Trotzdem ist es bis heute noch nicht gelungen alle Briefanschriften des Postaufkommens automatisch zu lesen bzw. innerhalb einer vorgegebenen vertretbaren Zeit automatisch zu lesen. Die nicht automatisch gelesenen Briefe werden entweder handsortiert oder an Arbeitsplätzen auf Videobildschirmen dargestellt, von denen die Postleitzahl abgetippt wird, während sich der Brief in einer mechanischen Speicherstrecke befindet. Bei der sogenannten Online-Videocodiertechnik muß das Videocodieren während der Zeit, in der die Sendung in der Speicherstrecke geführt wird, abgeschlossen werden. Üblicherweise kann dabei von den Videocodierkräften nur die Postleitzahl eingegeben werden, was dann eine Sortierung auf Hauptrichtungen, nicht jedoch auf Straßen und Hausnummern zuläßt. Die Planung der Zahl der Operateure erweist sich als schwierig, da bei schwankenden Leseraten, d.h. dem Anteil der maschinell lesbaren Adressen, immer die passende Zahl von Codierkräften für das Eingeben der Postleitzahl von Hand zur Verfügung stehen muß. Bekannt ist bereits die Integration der Online-Videocodiertechnik mit Vorrichtungen zum automatischen Lesen der Sendungen (OCR-Technik). Die hauptsächlichen bei einer solchen Integration auftretenden Probleme resultieren aus der mechanischen Speicherstrecke, die bestimmt, wie viele Sendungen mechanisch für die weitere Verarbeitung gespeichert werden können und der inhomogenen Natur des Sendungsstroms, was die Lesbarkeit der auf die Sendungen aufgebrachten Anschriften angeht. Zur Lösung dieser Probleme ist bereits in der US-PS 4,992,649 vorgeschlagen worden, jede Sendung mit einem Code zu charakterisieren, der dem elektronischen bzw. Videobild der Sendung zugeordnet wird. Die Charakterisierung jeder Sendung erfolgt durch Aufbringung eines der gelesenen Anschrift entsprechenden Codes oder eines ID-Tags auf die Sendung. Bei diesem bekannten System werden Sendungen, die nicht erfolgreich automatisch gelesen worden sind, auf jeden Fall mit einem ID-Tag versehen und ein zweites Mal verarbeitet, und zwar entweder durch die OCR-Leseelektronik oder manuell durch Codierkräfte an Videocodierplätzen. Diese sog. Offline-Verarbeitung gemaß der US-PS 4,992,649 wird ermöglicht durch Speicherung der Videobilder der Sendungen in einem entsprechenden Langzeitspeicher. Zwar gehen bei diesem bekannten System Informationen zu Briefen, die nicht automatisch lesbar sind, nicht verloren, da die Sendungen einen ID-Tag erhalten und daher die erwähnte zweite Verarbeitung der Videobilder ermöglicht, jedoch besteht der Nachteil einer nicht optimalen Ausnutzung der Möglichkeit, nicht automatisch gelesene Sendungen, die sich noch innerhalb der Speicherstrecke befinden, baldigst durch Codierkräfte an den Videocodierplätzen bearbeiten zu lassen und diese Sendungen mit einem der gelesenen Adreßinformation zugeordneten Code zu versehen.

Bei den Codierungen wird weiterhin zwischen Abgangs- und Eingangscodierung unterschieden. Bei der Abgangscodierung werden die von einem Postamt abgehenden Sendungen insbesondere nach den Postleitzahlen gelesen und codiert, während bei der Eingangscodierung die eingehenden Sendungen bezogen auf weitere Bestandteile der Adreßinformationen mit einem entsprechenden Code versehen werden. Daneben spielen zunehmend Verfahren zur Extraktionscodierung, bei dem bestimmte Teile der Anschrift aus der Anschrift genommen und zur Codierung verwendet werden, eine Rolle. Erfolgt die Codierung an den Videocodierplätzen im Postamt, bzw. in dessen unmittelbarer Nähe, in dem auch die mechanische Bearbeitung der Sendungen erfolgt, so bezeichnet man die betreffende Codiertechnik als lokal, erfolgt die Videocodierung dagegen in einem räumlich getrennten Codierzentrum, so wird die Codiertechnik als remote bezeichnet.

Aufgabe der vorliegenden Erfindung ist die Verbesserung des Standes der Technik und insbesondere die Angabe eines Verfahrens und einer Vorrichtung, um eine verbesserte Verarbeitung von nicht innerhalb einer vorgegebenen Zeit gelesenen Sendungen, die sich noch innerhalb einer mechanischen Speicherstrecke befinden, zu ermöglichen. Die Aufgabe wird durch die Merkmale der Patentansprüche 1 und 8 gelöst. Weitere vorteilhafte Ausführungen der Erfindung sind den Unteransprüchen und der Beschreibung zu entnehmen.

Mit der erfindungsgemäßen Lösung der Aufgabe ist es möglich ein Maximum an Sendungen Online zu codieren, so daß bloß ein Minimum Offline codiert werden muß. Es ist weiter möglich, ohne eine Verlängerung der Speicherzeit in der Speicherstrecke zusätzlich zur Ausgangscodierung für eine maximale Anzahl von Sendungen eine Eingangscodierung bzw. Extraktionscodierung vorzunehmen. Je nach Verfügbarkeit von Codierpersonal kann ein gewisser Anteil von Sendungen Online codiert, der Rest mit einem ID-Tag versehen werden und nachdem die zwischengespeicherten Videobilder dieser Sendungen Offline bearbeitet wurden, in einem zweiten Durchlauf mit Codierungen versehen werden. Damit ist eine volle Auslastung der Videocodierkräfte bei einem maximalen Maschinendurchsatz möglich.

Es ist weiterhin gesichert, daß jede begonnene Videobearbeitung zu Ende geführt wird. Insbesondere ist es vorteilhaft mit grundsätzlich geringfügiger Unterkapazität an Videocodierkräften zu arbeiten. Aus den sich in diesem Fall langsam füllenden Puffer werden bei OCR-Leseratenschwankungen Bilder zur Videocodierung bereitgestellt.

Besonders vorteilhaft ist es, erfindungsgemäß Kombinationen von Online/Offline/Abgangs-Eingangscodierungen in lokaler bzw. remote-Ausführung vorzusehen und damit die Erfindung den verschiedenen Anwendungsbedingungen anzupassen.

Im folgenden wird anhand der Figuren 1 bis 5 die Erfindung genauer beschrieben. Hierbei zeigt
- Figur 1: die hauptsächlichen Komponenten einer erfindungsgemäßen Vorrichtung,
- Figur 2: eine Funktionsvariante der Erfindung mit lokaler Online/Offline-Abgangscodierung,
- Figur 3: eine Variante mit lokaler Online/Offline-Abgangscodierung und Offline-Eingangscodierung;
- Figur 4: eine Variante mit lokaler Online-Abgangscodierung und remote Offline-Eingangscodierung;
- Figur 5: eine Variante mit remote Offline-Abgangs- und Eingangscodierung.

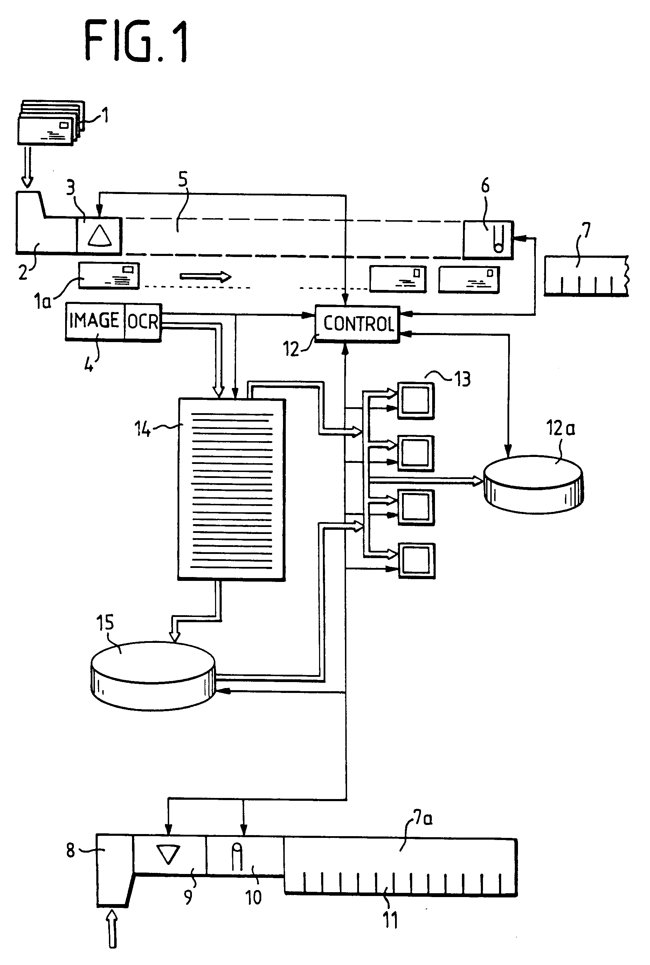

Bei der in Figur 1 gezeigten erfindungsgemäßen Vorrichtung werden zu verarbeitende Sendungen 1 über eine Eingabestation 2 einer Abtaststation 3 zugeführt mittels der von zumindest einer Oberfläche der Sendungen 1a Videobilder erzeugt werden, die Mitteln zum automatischen Lesen der Adreßinformation und zur Zuordnung eines entsprechenden Codes, insbesondere eines Bar-Codes 4 zugeführt werden. Nach der Abtastung der Sendungen gelangen diese in eine mechanische Speicherstrecke 5 und werden von dieser zu einer Druckstation 6 gefördert, wo die Sendungen mit einem der gelesenen Adreßinformation entsprechenden Code oder einem ID-Tag versehen werden um nachfolgend automatisch in einer Vorrichtung 7 sortiert zu werden. Dies kann beispielsweise dadurch geschehen, daß die Sendungen einer Vorrichtung 7a über eine Eingabevorrichtung 8 zugeführt werden, in der Abtasteinrichtung 9 erneut gelesen, ggf. mit zusätzlicher Information in der Druckerstation 10 versehen werden und in die Stapelfächer 11 abgelegt werden. Diese Komponenten, die für sich bereits aus der US-PS 4,992,649 bekannt sind, werden durch die Kontrolleinrichtung 12 gesteuert. Ebenso bekannt aus dem Stand der Technik ist die Aufschaltung der Videobilder auf Videocodierplätze 13, an denen eine Zuordnung von durch Codierkräfte gelesenen Adreßinformationen zu entsprechenden Codes erfolgt. Üblicherweise enthält der zu verarbeitende Sendungsstrom zu einem bestimmten Prozentsatz Sendungen mit nicht automatisch lesbarer Adreßinformation bzw. Sendungen, deren Adreßinformation nicht innerhalb einer vorgegebenen Zeit automatisch lesbar ist. Die maximale Zeit, die zum Lesen der Adreßinformation und der Zuordnung eines entsprechenden Codes, insbesondere eines Bar-Codes bei einem einmaligen Durchlauf der Sendungen zur Verfügung steht, wird i.w. bestimmt durch die Laufzeit einer Sendung in der Speicherstrecke, bis sie die Druckstation erreicht. Die Videobilder solcher Sendungen, deren Adreßinformationen nicht innerhalb der vorgegebenen Zeit automatisch gelesen worden sind, werden den Videocodierplätzen zugeführt, damit eine Eingabe des Codes durch die Videocodierkräfte erfolgen kann. Falls das Codeergebnis so rechtzeitig vorliegt, daß die betreffende Sendung noch in der Druckstation 6 mit dem entsprechenden Code versehen werden kann, wird dies über den Controller 12 veranlaßt. Andernfalls wird die betreffende Sendung mit einem ID-Tag versehen. Dabei wird das Videobild jeder nicht innerhalb der vorgegebenen Zeit nicht automatisch gelesenen Sendung in einem Puffer abgelegt, aus dem das jeweils jüngste Videobild den Videocodierplätzen zugeführt wird. Die Größe des Puffers bestimmt sich i.w. aus der Verweilzeit der Sendungen in der mechanischen Speicherstrecke und der Zahl der Codierkräfte. Videobilder, für die keine rechtzeitige Codierung mehr möglich ist, werden, wenn genügend jüngere Bilder zur Verfügung stehen, zu einem weiteren Speicher 15, z.B. einer Festplatte, transferiert. Vorzugsweise wird dabei eine First-In/First-Out Regel verwendet.

Bei einer Leerung des Puffers 14 werden alte Bilder von dem Speicher 15 in den Puffer 14 zurückgespeist. Der Puffer 14 wird in einem vorgegebenen Füllzustand z.B. von ca. 80 - 90% gehalten. Es ist zu betonen, daß die beiden beschriebenen Speicher 14 und 15 physikalisch nicht getrennt ausgeführt werden müssen, sondern daß auch ein ausreichend großer Speicherbereich, der entsprechend verwaltet wird, ausreicht. Auf Grund der beschriebenen Strategie, jeweils das jüngste in den Speicher 14 abgelegte Bild den Videocodierplätzen 13 zur Verfügung zu stellen (LIFO-Strategie), ist gewährleistet, daß zu Stoßzeiten hoher freier Codierkapazität ein Maximum Online-fähiger Sendungen sehr schnell bereit steht, während zu Zeiten geringer Codierkapazität eine Bildspeicherung auf Festplatte vorgenommen werden kann. Alle Bewegungen in LIFO-Puffer 14 werden von der Kontrolleinheit 12 überwacht, die ihrerseits mit den Videocodierplätzen 13 kommuniziert. Vorzugsweise sind als Codierplätze dabei PCs vorgesehen. Codierergebnisse werden von den Codierplätzen an die Sortieranlage 7a übertragen, falls sie zur Sortierung sofort genutzt werden können, andernfalls z.B. in einem zum Controller 12 gehörigen Speicher, abgelegt. Für den Fachmann ist es selbstverständlich, das geschilderte Verfahren bzw. die betreffende Vorrichtung der gewünschten Lesetiefe der Anschriften anzupassen.

Grundsätzlich läßt sich die Erfindung auch derart ausführen, daß zusätzlich zu den automatischen Mitteln zum Lesen der Adreßinformation Videobilder den Videocodierplätzen Online zur Verfügung gestellt werden, ohne daß diese im Puffer 14 zwischengespeichert werden.

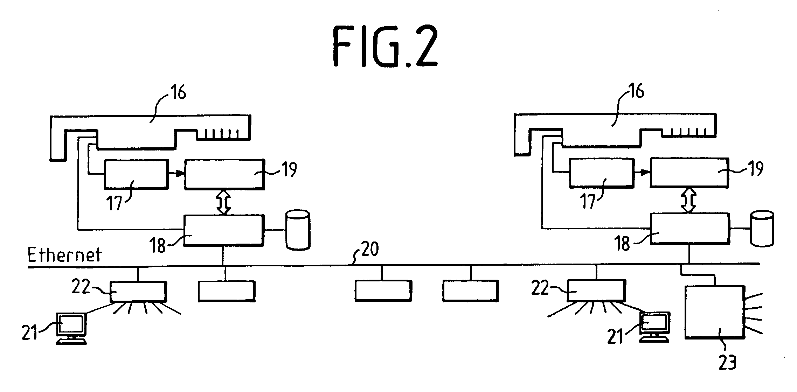

In Figur 2 ist eine Ausführungsform dargestellt, bei der eine lokale Online/Offline-Abgangscodierung erfolgt (Variante A). Hierbei sind vorzugsweise eine Anzahl von Vorrichtungen zur Eingabe, Abtastung, zum mechanischen Speichern, versehen mit Codierungen bzw. ID-Tags 16, zum automatischen Lesen 17, Speichern der Videobilder 18, sowie zur System-Kontrolle 19 an ein Bus-System 20 gekoppelt, das mit einer Anzahl von Videocodierplätzen 21 verbunden ist. Das gesamte System wird durch eine Zentraleinheit 23 überwacht und gesteuert. Es kann auch in einem Arbeitsgang Abgangs- und Eingangscodierung vorgenommen werden (Variante B). Allerdings muß dann auf Grund des erheblich größeren Codieraufwandes die Zahl der Codierkräfte entsprechend erhöht werden.

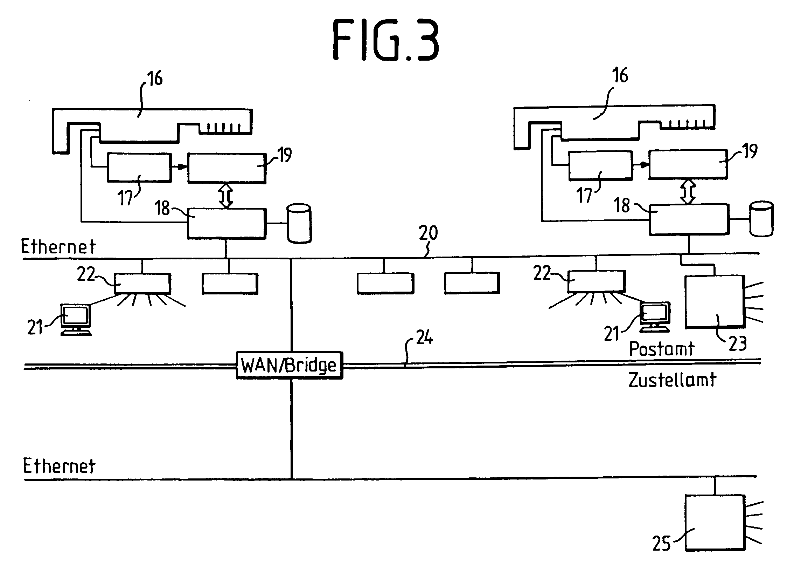

Stehen zur vollständigen Online-Abgangs- und Eingangscodierung nicht genügend Codierkapazitäten zur Verfügung, so wird zunächst nur Online abgangscodiert, Fig. 3. Jedoch werden alle Videobilder zur späteren Offline-Eingangscodierung gespeichert (Variante C). Sendungen, die zu lokaler Post gehören, können so in einem zweiten Lauf direkt in die Verteilbezirke sortiert werden. Abgehende Post wird vorzugsweise nur dann eingangscodiert, wenn das Empfängerpostamt mit einer Verteilmaschine ausgerüstet ist. Diese Eingangscodierung kann sogar noch erfolgen, während die Sendungen auf dem Transport zum Empfängerpostamt sind. Allerdings ist hierfür ein einheitlicher ID-Tag für die verschiedenen Postämter erforderlich, sowie eine Datenfernübertragung 24 für die Empfängerpostämter, die die vorsortierte Eingangsinformationen entgegen nehmen. Ebenso wie bei den Varianten gemäß Figur 2 besteht auch hier die Möglichkeit, nur einen Teil der Codierkräfte Online Abgangscodierungen vornehmen zu lassen, während der Rest sich mit der Eingangscodierung der gespeicherten Bilder beschäftigt.

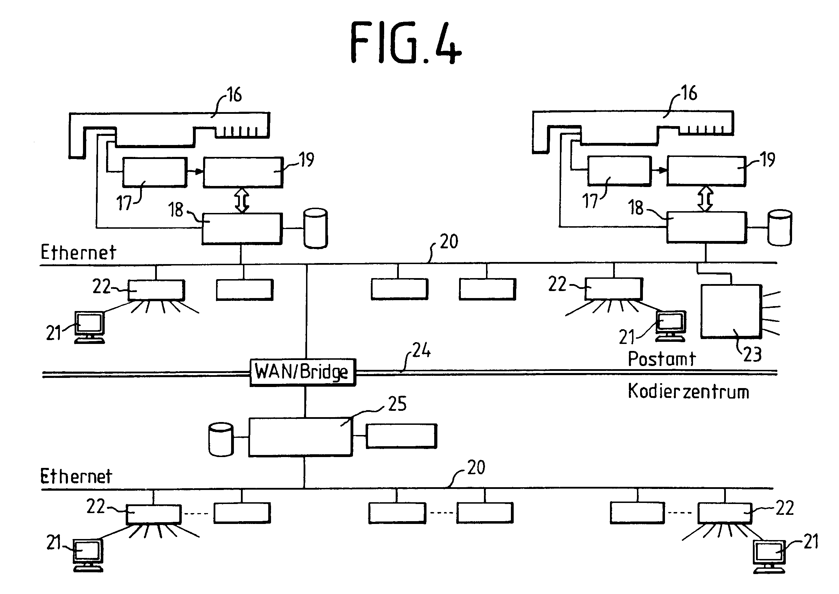

In Figur 4 ist eine Ausführungsform dargestellt, bei der der Ort der Eingangscodierung aus dem Postamt in Codierzentralen verlagert ist, das heißt die Eingangscodierung erfolgt remote (Variante D). Hierbei werden Übertragungs- und Speichermittel 25 für die Videobilder verwendet, die als solche nicht Gegenstand der Erfindung sind und dem Fachmann geläufig sind.

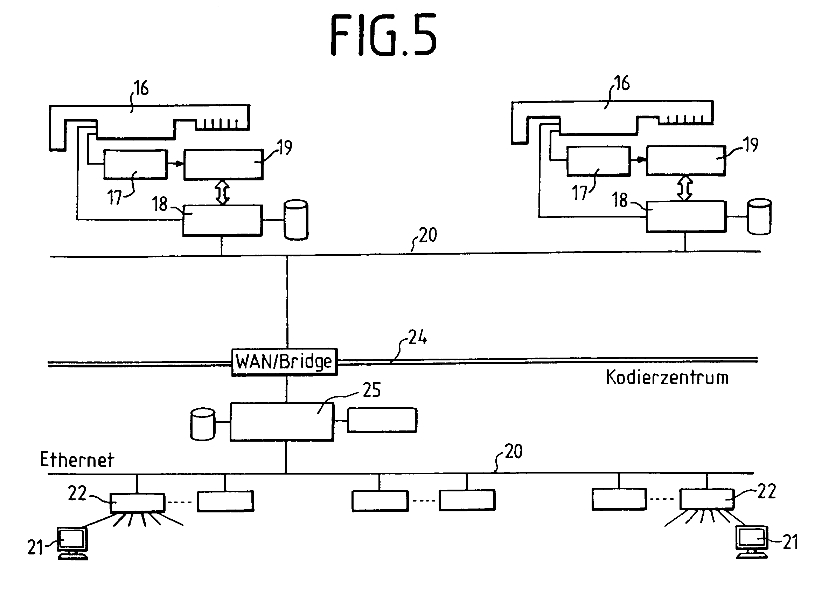

Eine noch komplexere Ausbaustufe der Vernetzung bei völligem Verzicht auf lokal arbeitende Codierkräfte zeigt Figur 5. Hier werden alle Videocodierungen in einer Zentrale vorgenommen (Variante E).

Die aufgezeigten fünf Codierstrategien sind jeweils für bestimmte Anwendungen und Problemstellungen optimal, wobei die Problemstellung auch im gleichen Postamt über die Zeit variieren kann. Um dem Rechnung zu tragen, werden die Grenzen zwischen den einzelnen Strategien fließend gehalten. Insbesondere ist es auch möglich, die beschriebenen Codierstrategien zu kombinieren. Durch Kombination der beiden Codierstrategien B und C entfällt das Nachsenden von Codierresultaten. Hierbei werden nämlich die Sendungen lokaler Post Online abgangs- und Offline eingangscodiert. Der Code, vorzugsweise wie erwähnt ein Bar-Code, wird im zweiten Sortiergang aufgedruckt. Sendungen von abgehender Post werden Online abgangs- und eingangscodiert und mit einem Code versehen. Bei Codierüberkapazitäten wird vorzugsweise von der Codierstrategie C zur Strategie B geschaltet, bei Codierunterkapazitäten von B nach C.

Ebenso ist eine Kombination der Codierstrategien C und D vorteilhaft. Die Eingangscodierung erfolgt primär Offline lokal (Variante C), eventuell unterstützt durch Offline remote (Variante D), falls die Codierkapazität im Postamt nicht ausreicht. Bei Störungen der Codierzentrale wird von der Variante D auf die Variante C umgeschaltet.

Bei einer weiteren Kombination erfolgt die Abgangscodierung primär Online lokal (Codierstrategie D). Falls die Codierkapazität im Postamt nicht ausreicht, wird zusätzlich im Codierzentrum gemäß der Strategie Abgang/Offline und Remote codiert (Codierstrategie E).

## Patentansprüche

1. Verfahren zum Sortieren von mit Adreßinformationen versehenen Sendungen bei dem
- die Sendungen sukzessive Abtastmittel zur Erzeugung eines Videobildes von jeder Sendung, einer mechanischen Speicherstrecke sowie eine Druckstation durchlaufen,
- die Videobilder ersten Mitteln zum Lesen der Adreßinformation und zur Zuordnung eines entsprechenden Codes zugeführt werden, wobei die Sendungen, für die innerhalb einer vorgegebenen Zeit die Adreßinformation gelesen wurden, in der Druckstation mit dem entsprechenden Code versehen werden und die Videobilder der Sendungen, für die innerhalb der vorgegebenen Zeit die Adreßinformation nicht automatisch gelesen wurde, Videocodierplätzen zum Lesen der Adreßinformation und zur Zuordnung eines entsprechenden Codes zugeführt werden und
- Sendungen, die nicht mit einem entsprechenden Code versehen werden, mit einem ID-Tag versehen werden und
- Code und ID-Tag gespeichert werden, um die betreffenden Sendungen zu einem späteren Zeitpunkt mit dem Code zu versehen,
- das Videobild jeder Sendung, für die die Adreßinformation nicht innerhalb der vorgegebenen Zeit automatisch gelesen wird, in einem Puffer abgelegt wird,
**dadurch gekennzeichnet**, daß folgende Schritte ausgeführt werden:
- aus dem Puffer wird das jeweils jüngste Videobild den Videocodierplätzen zugeführt, wobei Sendungen, denen daraufhin ein entsprechender Code zugeordnet wird, bevor die Sendung die Druckstation erreicht, in der Druckstation mit dem Code versehen werden,
- die übrigen Sendungen werden in der Druckstation mit einem ID-Tag versehen.

2. Verfahren nach Anspruch 1, dadurch gekennzeichnet, daß als erste Mittel zum Lesen automatische Lesemittel vorgesehen sind.

3. Verfahren nach Anspruch 2, dadurch gekennzeichnet, daß zusätzlich als erste Mittel zum Lesen Videocodierplätze vorgesehen sind.

4. Verfahren nach einem der Ansprüche 1 bis 3, dadurch gekennzeichnet, daß die Videobilder von Sendungen, die nur mit einem ID-Tag versehen wurden, zu einem späteren Zeitpunkt den Videocodierplätzen oder Mitteln zum automatischen Lesen der Adreßinfor mation zugeführt werden.

5. Verfahren nach Ansprüchen 1 bis 4, dadurch gekennzeichnet, daß die mit einem Code versehenen Sendungen gemäß diesem Code in Sortierfächer verteilt werden.

6. Verfahren nach Ansprüchen 1 bis 5, dadurch gekennzeichnet, daß eine lokale Online/Offline-Abgangscodierung, lokale Online/Offline-Abgangs- und Eingangscodierung, ddlokale Online/Offline-Abgangscodierung mit Offline-Eingangscodierung, lokale Online-Abgangscodierung mit remote Offline-Eingangscodierung oder remote Offline-Abgangs- und Eingangscodierung oder remote Online/Offline-Abgangs- und Eingangscodierung vorgesehen ist.

7. Verfahren nach Anspruch 1 bis 6, dadurch gekennzeichnet, daß im Puffer gehaltene Videobilder von Sendungen, denen kein Code zugeordnet wurde, bevor die Sendung die Druckstation erreicht hat, nach einer First-In/First-Out Regel einem Speicher zugeführt werden, aus dem sie den Videocodierplätzen zugeführt werden.

8. Vorrichtung zum Sortieren von mit Adreßinformationen versehenen Sendungen, mit Mitteln zum Abtasten und zur Erzeugung eines Videobildes von jeder Sendung, Mitteln zum automatischen Lesen der Adreßinformation und zur Zuordnung eines entsprechenden Codes zu jedem Videobild, Videocodierplätzen zum Lesen der Adreßinformation und zur Zuordnung eines entsprechenden Codes zu jedem Videobild, Mitteln zum Speichern der Videobilder und Codes, einer mechanischen Speicherstrecke, einer Druckstation zur Kennzeichnung von Sendungen sowie einer Kontrolleinheit zur Steuerung der o.g. Mittel und Komponenten, wobei ein Puffer vorgesehen ist, in dem das Videobild von jeder Sendung abgelegt wird, deren Adreßinformation nicht innerhalb einer vorgegebenen Zeit automatisch gelesen wurde, dadurch gekennzeichnet, daß aus dem Puffer den Videocodierplätzen das jeweils jüngste Videobild zugeführt wird, wobei Sendungen, denen daraufhin ein entsprechender Code zugeordnet wird, bevor die Sendung die Druckstation erreicht, in der Druckstation mit dem Code versehbar sind und die übrigen Sendungen in der Druckstation mit einem ID-Tag versehbar sind.

## Claims

1. Method of sorting items of mail provided with address data, in which
- the items of mail successively run through scanning means for generation of a video image of each item of mail, a mechanical storage path as well as a printing station,
- the video images are fed to first means for the reading of the address information and for the association of a corresponding code, wherein the items of mail for which the address information was read within a predetermined time are provided with the corresponding code in the printing station, and the video images of the items of mail for which the address information was not automatically read within the predetermined time are fed to video coding places for the reading of the address information and for the association of a corresponding code, and
- items of mail which are not provided with a corresponding code are provided with an ID tag and
- code and ID tag are stored so that the items of mail concerned can be provided with the code at a later point in time,
- the video image of each item of mail for which the address information is not automatically read within the predetermined time is filed in a buffer store,
characterised thereby that the following steps are carried out:
- the respectively youngest video image is fed from the buffer store to the video coding places, wherein items of mail, to which a corresponding code is as a result assigned before the item of mail reaches the printing station, are provided with the code in the printing station,
- the remaining items of mail are provided with an ID tag in the printing station.

2. Method according to claim 1, characterised thereby that automatic reading means are provided as first means for the reading.

3. Method according to claim 2, characterised thereby that in addition video coding places are provided as first means for the reading.

4. Method according to one of claims 1 to 3, characterised thereby that the video images of items of mail which were provided only with an ID tag are fed at a later point in time to the video coding places or to means for the automatic reading of the address information.

5. Method according to claims 1 to 4, characterised thereby that the items of mail provided with a code are distributed into sorting boxes in accordance with this code.

6. Method according to claims 1 to 5, characterised thereby that a local online/offline output coding, local online/offline output and input coding, local online/offline output coding with offline input coding, local online output coding with remote offline input coding or remote offline output and input coding or remote online/offline output and input coding is provided.

7. Method according to claim 1 to 6, characterised thereby that video images, which are held in the buffer store, of items of mail to which no code as assigned before the item of mail has reached the printing station are fed in accordance with a first in/first out rule to a store from which they are fed to the video coding places.

8. Device for the sorting of items of mail provided with address data, comprising means for scanning, and for generating a video image of each item of mail, means for the automatic reading of the address information and for the association of a corresponding code to each video image, video coding places for the reading of the address information and for the association of a corresponding code to each video image, means for the storage of the video images and codes, a mechanical storage path, a printing station for the marking of items of mail as well as a checking unit for the control of the aforesaid means and components, wherein a buffer store is provided in which the video image of each item of mail is filed of which the address information was not automatically read within a predetermined time, characterised thereby that the respectively youngest video image is fed from the buffer store to the video coding places, wherein items of mail, to which a corresponding code is as a result assigned before the item of mail reaches the printing station, are provided with the code in the printing station and the remaining items of mail are provided with an ID tag in the printing station.

## Revendications

1. Procédé pour trier des objets de correspondance pourvus d'informations d'adresse, selon lequel
- les objets de correspondance passent successivement par des moyens d'exploration servant à produire une image vidéo de chaque objet, un circuit accumulateur mécanique et une station d'impression,
- les images vidéo sont amenées à des premiers moyens pour lire l'information d'adresse et pour coordonner un code correspondant, les objets dont l'information d'adresse a été lue dans un temps préfixé étant pourvus du code correspondant dans la station d'impression et les images vidéo des objets dont l'information d'adresse n'a pas été lue automatiquement dans le temps préfixé étant transmises à des postes de codage vidéo en vue de la lecture de l'information d'adresse et de la coordination d'un code correspondant et
- les objets non pourvus d'un code correspondant sont munis d'un repère d'identification, avec
- mémorisation du code et du repère d'identification afin de munir les objets concernés ultérieurement du code, et
- stockage dans une mémoire tampon de l'image vidéo de chaque objet de correspondance dont l'information d'adresse n'a pas été lue automatiquement dans le temps préfixé,
caractérisé par les étapes suivantes:
- extraction de la mémoire tampon de l'image vidéo la plus récente et sa transmission aux postes de codage vidéo, les objets auxquels est coordonné ensuite un code correspondant, avant que l'objet concerné n'atteigne la station d'impression, étant pourvus du code dans la station d'impression et
- apposition d'un repère d'identification sur les autres objets dans la station d'impression.

2. Procédé selon la revendication 1, caractérisé en ce que les premiers moyens de lecture sont des moyens de lecture automatique.

3. Procédé selon la revendication 2, caractérisé en ce que des postes de codage vidéo sont prévus en plus comme premiers moyens de lecture.

4. Procédé selon une des revendications 1 à 3, caractérisé en ce que les images vidéo d'objets munis seulement d'un repère d'identification, sont transmises ultérieurement aux postes de codage vidéo ou à des mpyens pour la lecture automatique de l'information d'adresse.

5. Procédé selon les revendications 1 à 4, caractérisé en ce que les objets pourvus d'un code sont répartis selon ce code dans des cases de tri.

6. Procédé selon les revendications 1 à 5, caractérisé par la prévision d'un codage local de départ en ligne/hors ligne, d'un codage local de départ et d'arrivée en ligne/hors ligne, d'un codage local de départ en ligne/hors ligne avec un codage local d'arrivée hors ligne, d'un codage local de départ en ligne avec un codage d'arrivée à distance hors ligne ou d'un codage de départ et d'arrivée à distance hors ligne ou d'un codage de départ et d'arrivée à distance en ligne/hors ligne.

7. Procédé selon les revendications 1 à 6, caractérisé en ce que les images vidéo conservées dans la mémoire tampon et appartenant à des objets de correspondance auxquels un code n'a pas été coordonné avant que l'objet n'atteigne la station d'impression, sont transférées, selon une règle "premier entré/premier sorti", à une mémoire d'où elles sont envoyées au postes de codage vidéo.

8. Dispositif pour trier des objets de correspondance pourvus d'informations d'adresse, comprenant des moyens pour explorer les objets et produire une image vidéo de chaque objet, des moyens pour lire automatiquement l'information d'adresse et coordonner un code correspondant à chaque image vidéo, des postes de codage vidéo pour lire l'information d'adresse et coordonner un code correspondant à chaque image vidéo, des moyens pour mémoriser les images vidéo et les codes, un circuit accumulateur mécanique, une station d'impression pour caractériser des objets, ainsi qu'une unité de commande pour commander les moyens et composants mentionnés ci-dessus, dispositif dans lequel est prévue une mémoire tampon dans laquelle est stockée l'image vidéo de chaque objet dont l'information d'adresse n'a pas été lue automatiquement dans un temps préfixé, caractérisé en ce que l'image vidéo chaque fois la plus récente est extraite de la mémoire tampon et amenée aux postes de codage vidéo, les objets auxquels est coordonné ensuite un code correspondant, avant que l'objet concerné n'atteigne la station d'impression, pouvant être pourvus du code dans la station d'impression, et les autres objets pouvant être pourvus d'un repère d'identification dans la station d'impression.
